# EUROPEAN PATENT APPLICATION

(11) **EP 1 288 834 A1**
(43) Date of publication of application: **05.03.2003**
(21) Application number: 02255930.6
(22) Date of filing: 27.08.2002
(51) Int. Cl.: G06F 17/60

(54) **Customized catalog with on-line purchases**

(30) Priority: 04.09.2001 US 946400
(71) Applicant: Hewlett-Packard Company, Palo Alto, CA 94304 (US)
(72) Inventor: Hill, Chris T., Camas, Washington 98607 (US); Caldwell, Lee, Eagle, Idaho 83616 (US)
(74) Representative: Jackson, Richard Eric

(57) **Abstract**

The present invention is directed to a personalized catalog for customers. A method according to one embodiment of the invention includes providing a computer system (50) that has browsable items available for purchase (52), identifying items browsed by a customer (54), generating a personalized catalog (46) containing items selected based on the items browsed by the customer, producing the catalog (60), and providing the catalog to the customer (64).

## Description

### Field of the Invention

The invention relates generally to on-line shopping. Specifically, the invention relates to providing customers with customized catalogs including available goods that may be of interest to the customer.

### Background of the Invention

Every year stores spend billions of dollars on advertising. Unfortunately, stores have not always had effective ways of ensuring that their advertising would reach an appropriate target audience, e.g. customers who are most likely to purchase the store's goods. Stores in the past have relied on mass mailings of identical advertisements and catalogs to potential customers or advertisements through various media such as newspapers, television, radio, etc. While stores often try to tailor their advertisements to an expected audience, mass-market advertising is often costly and is not guaranteed to reach the entire target audience. For example, a sports drinks company may advertise during a television broadcast of a basketball game, but not everyone who watches basketball will be interested in sports drinks and many people who don't watch basketball will be interested in sports drinks.

The most cost effective advertising is advertising which presents current customers with items that are known to match their individual tastes. Novel methods of providing customized advertising and buying opportunities to current and potential customers are desirable. The present invention provides such a method.

### Summary of the Invention

The present invention is directed to personalized catalogs for customers. A method according to one embodiment of the invention includes providing a computer system that has browsable items available for purchase, identifying items browsed by a customer, generating a personalized catalog containing items selected based on the items browsed by the customer, producing the catalog, and providing the catalog to the customer.

### Brief Description of the Figures

Fig. 1 is a schematic illustration of an exemplary system for creating a personalized catalog.

Fig. 2 is a flow chart demonstrating how the individual system components from Fig. 1 may work together to provide a personalized catalog for a customer in one embodiment of the invention.

### Detailed Description of the Invention

In one embodiment, the present invention provides a method for a business to providing directed advertising, in the form of a personalized catalog, to customers who shop in the business' Internet store or stores. The present invention involves tracking the items viewed by a customer as the customer browses a store's web site, automatically generating a personalized catalog based on the items viewed by the customer, and sending the customer a personalized hard copy catalog containing the items viewed by the customer.

Many stores are beginning to advertise and make goods and services available through the Internet. Many stores now provide their customers with on-line shopping experiences that allow the customer to use a home computer to browse and purchase items available from the store. The Internet provides a unique opportunity for stores to observe and monitor the shopping and browsing habits of potential customers.

The Internet links a large number of computers through a network so that computer users in different locations have access to the same information. The information is stored on server computers. Upon a request from a user's computer, the information stored on one or more servers is sent to the user's computer, interpreted by a web browser, and displayed on the computer screen as one or more web pages. Multiple web pages may be organized into a web site that may include navigational aids such as a table of contents or one or more search engines.

Typically, each web page has a unique address that identifies the web page and the server on which the information that creates the web page is stored. The address may further include information regarding the web page's relationship with other web pages within the web site, additional identifying information, or additional computer code. A user may move from one web page to another by requesting the address of the page the user wishes to view. More commonly, a user will move from one page to another by selecting and activating a "link" on the web page they are currently viewing. Each link is correlated with a particular web page. Multiple links may be correlated to the same web page. In essence, the link is a shortcut that automatically requests that information from the correlated web page be sent to the user's computer. Thus, activation of a link results in the user being automatically redirected to another web page. In this manner, a user may easily navigate through a number of web pages to view a range of web pages containing a wide variety of information.

In the last few years the Internet has developed into a popular tool for aiding businesses in selling products and services. More and more stores are making their goods available to Internet shoppers via "on-line" Internet stores. Commonly known on-line stores include hpshopping.com, Amazon.com, and buy.com. Generally, on-line stores provide a web site hosted by a server that may or may not be owned and maintained by the store.

Typically, on-line stores provide customers with a web site containing a series of web pages through which the customer may view items of interest that are offered for sale by the store. The web site may be organized in almost an infinite number of ways depending upon the desire of the store. Often, customers are provided with a series of linked pages containing navigable lists of items for sale or categories of items for sale. These pages are often designed to follow a branching system with an initial page listing the broadest categories and additional pages narrowing down the field. These lists or menus allow customers to focus their shopping experience. Additionally or altematively, the web site may include a search engine. Customers can query the web site search engine for items including given keywords. In this manner, customers are able to view a variety of items available from the store, often narrowed down to a particular field of interest.

Using navigational aids provided by the web site, such as links, or navigational aids provided by the web browser, such as the browser's forward and backward buttons or buttons preset for particular web pages, customers may move through various pages to view different items. In this manner customers are able to browse or "window-shop" and/or engage in comparison- shopping.

The content of the web pages may depend upon the desire of the store. The web pages may include any level of description of the items for sale, from very basic to very detailed. The pages may include links to other pages. These links may direct the customer to pages showing additional information about the items for sale, availability of the items, or related items available for purchase. For example, a computer hardware page may include links to compatible software programs and a page selling an article of clothing may include links to matching accessories.

Various methods of allowing customers to make on-line purchases are known. Generally, a customer selects an item to be purchased, inputs a credit card number or other payment method through a secure web page, and indicates the address to which the item should be shipped. Any suitable method of allowing customers to purchase the items may be used.

Methods for tracking a user's progress through a web site are known. Tracking methods often, but not always, require the use and transmission of "cookies" between the customer's computer and the server. A cookie is essentially a set of data that is stored in the user's browser to identify a particular user to the server and vice versa. A unique identifier can be assigned to each user, and set as a cookie.

Using cookies that uniquely identify each customer visiting the web site, the customer's progress through the web site can be tracked. For example, each time a customer goes to a different web page, a cookie may be sent to the server identifying the customer. The server can then maintain a database storing all the web pages that are visited by that particular customer. Other suitable methods of tracking the items that are viewed by a given customer may likewise be used.

Generally, the pages visited by the customer are likely to include items of interest to that particular customer. Thus, by monitoring the web pages visited by a particular customer, the on-line store is able to obtain information regarding the particular interests of that customer, and create a database including this information. This database can then be used to direct personalized advertising to that customer.

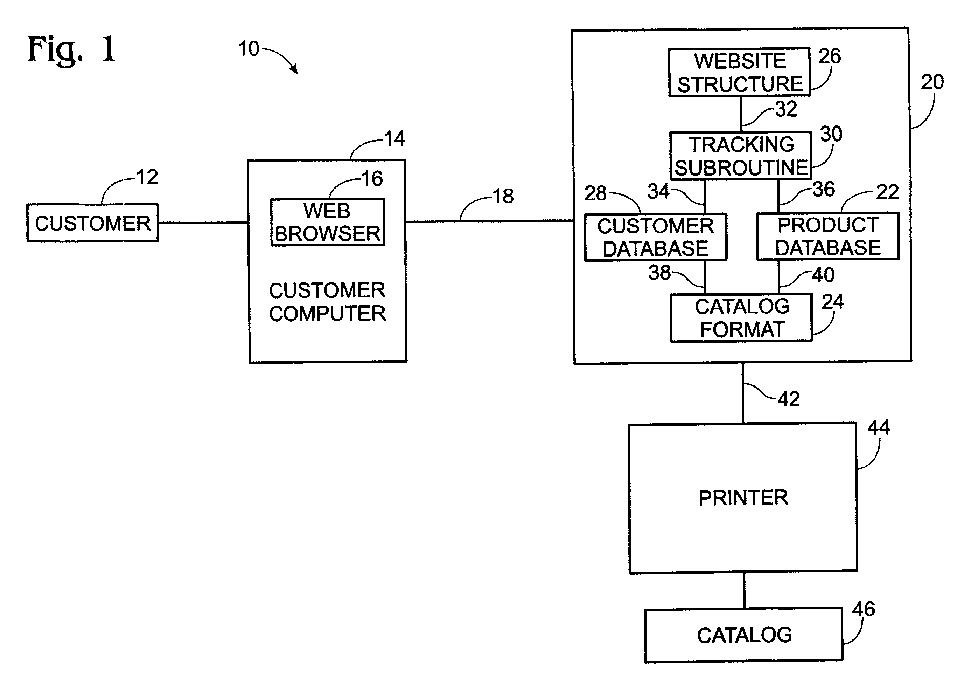

Fig. 1 depicts one example of a system for creating a personalized catalog 46. As shown, a computer 14 operated by a customer 12 connects to a server 20 through an Internet connection 18. Computer 14 includes a web browser 16. Server 20 hosts a customer database 28, a product database 22, a website structure program 26, a tracking subroutine 30, and a catalog formatting program 24. Server 20 is connected to printer 44 through communication line 42. Server 20 may include multiple processors and may take the form of a single computer or multiple computers working in concert.

Customer database 28 may, for example, maintain record relating to all the customers who access the website including name, address, pages or products visited, date and time of visit(s), etc. Customer database 28 may be part of or in communication with tracking subroutine 30, as shown by line 34. Furthermore, the customer database may be in communication with catalog formatting program 24, as shown by line 38.

Product database 22 may, for example, maintain records related to the products including product name, description, cost, status, e.g. how many are in stock, etc. Product database 22 may be part of or in communication with tracking subroutine 30, as shown by line 36. Moreover, the product database may be in communication with catalog formatting program 24, as shown by line 40.

Website structure program 26 produces the look and feel of the website. The website structure program may or may not interact with product database 22 to produce the website. Website structure program 26 may be in communication with tracking subroutine 30, as shown by line 32.

Catalog formatting program 24 interacts with customer database 28 and product database 22 either directly or indirectly to produce the layout of the personalized catalog 46.

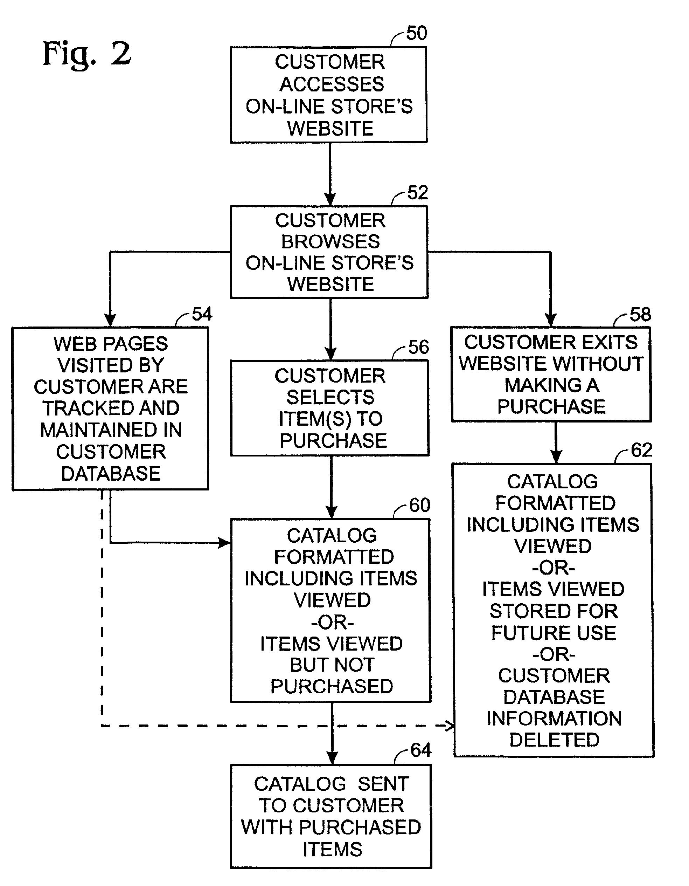

Fig. 2 is a flow chart depicting an example of how the individual system components described above in reference to Fig. 1 may work together to provide a personalized catalog for a given customer. Initially customer 12 accesses an on-line store's website by connecting computer 14 to server 20 through an access 18, shown at 50. Access 18 may, for example, be an internet connection. Browser 16, product database 22 and website structure program 26 work together to present customer 12 with a web site including the items available for sale from the store. Customer 12 thus may browse the on-line store's web site, shown at 50. As the customer browses the web site, information regarding the web pages visited by customer 12 is tracked and maintained in customer database 28, shown at 54. The information that is tracked and maintained relates to the customer's browsing habits and may include the web pages visited, items viewed by the customer, type and level of detail requested by the customer, i.e. size, availability, reviews, etc. Eventually customer 12 either selects one or more items to purchase, shown at 56, or exits the website without making a purchase, shown at 58. Customer database 28, product database 22 and catalog formatting program 24 then work together to create a personalized catalog including the items viewed by the customer, shown at 60. Alternatively, if customer 12 exits the website without making a purchase, rather than creating a catalog at that time, information regarding the customer's browsing habits is recorded in customer database 28 may be stored for future use, shown at 62. As a further alternative, when the customer does not make a purchase, the information recorded in customer database 28 regarding the items viewed by the user may be deleted, shown at 62. Once the catalog is formatted, the catalog is sent to printer 32. The printed catalog is then sent to the customer. If the customer has purchased any items, the catalog may be sent to the customer along with the purchased item or items, shown at 64.

The catalog may include detailed descriptions and even special offers or coupons based on the customer's preferences, as demonstrated by the customer's actions while browsing the website. In addition, the catalog may include related items that were not viewed by the customer, but that may be of interest. Furthermore, the personalized catalog need not include every item viewed by the customer, particularly when it may be unlikely that the customer will purchase a given item in view of past purchases.

The catalog may exclude items identical or similar to those items that were recently purchased by the customer. For example, a customer may have viewed a variety of computers and purchased a personal desktop computer having a 800MHz processor, DVD drive, and a re-writable CD-ROM drive. It may be of little value to send the customer a catalog advertising the purchased computer or computers that were not purchased by the customer. Instead, the personalized catalog could contain software and hardware that is compatible with the purchased computer, including, for example, printers, scanners, DVDs, re-writable CDs, games, word processing software, etc. In addition, the catalog may include special coupons or discounted prices for these items.

The level to which the catalog is personalized for the customer may vary depending on the desire of the store, and the information gained regarding the customer. For example, a customer may have browsed web pages showing women's clothes and shoes. In addition, that customer may have queried whether a particular item of clothing is available in a size 2 petite, and/or whether a particular shoe is available in a women's size 4 ½. Based on this information, the personalized catalog for this customer could contain women's clothes and shoes, petite women's clothes and women's shoes under size 6, size 2 petite women's clothes and size 4½ women's shoes, etc.

The selection of items to be included in the personalized catalog may be completely automated. For example, the customer database 28 and product database 22 may be linked so that the two databases may be cross-referenced and the resulting information formatted by the catalog formatting program 24 to create an electronic version of the personalized catalog. The electronic catalog may then be automatically sent to printer 32 for printing without requiring any additional human intervention. Alternatively, an electronic copy of the catalog may be provided to the customer by any suitable wired or wireless transmission, for example in an email.

The process may further be automated by employing computer-implemented rules to determine the items to be included in the catalog. These rules may be implemented, for example, by catalog formatting program 24, which may include algorithms designed to generate an effective personalized catalog.

For example, it may not make economic sense to send to a particular customer a catalog containing every item viewed by that customer. The program could be designed to limit duplication of products or limit the products in the catalog to only those items for which the customer requested pricing information, availability, or indicated interest in the item in some manner.

Additionally or alternatively, based on the items viewed by a particular customer, the program could be designed to determine which items this customer would be most likely to purchase and include those items in the catalog. For example, a particular store may know that 75% of customers who purchase item X later purchase item Y. With this information, the program could be designed to include item Y in the personalized catalog for customers who purchase item X.

Furthermore, the program could be designed to track customer purchasing trends in order to evaluate which items are most often purchased together or by the same customer. Moreover, it may be desirable to limit the items in the personalized catalog to only those items that are currently in stock, or that represent the most profitable transaction. Of course, it may be desirable to add additional information to the catalog. For example, the catalog may include standard sections that are sent to all customers such as special sale or clearance items.

As stated above, once the catalog is formatted, it is sent to a printer 32 for printing. Any suitable printer may be used. The printer may be a dedicated printer for printing catalogs, or used to print other paperwork generated for each purchase, including, for example, sales receipts and return information.

It is believed that the disclosure set forth above encompasses multiple distinct inventions with independent utility. While each of these inventions has been disclosed in its preferred form, the specific embodiments thereof as disclosed and illustrated herein are not to be considered in a limiting sense as numerous variations are possible. The subject matter of the inventions includes all novel and non-obvious combinations and subcombinations of the various elements, features, functions and/or properties disclosed herein. Similarly, where the claims recite "a" or "a first" element or the equivalent thereof, such claims should be understood to include incoiporation of one or more such elements, neither requiring nor excluding two or more such elements.

It is believed that the following claims particularly point out certain combinations and subcombinations that are directed to one of the disclosed inventions and are novel and non-obvious. Inventions embodied in other combinations and subcombinations of features, functions, elements and/or properties may be claimed through amendment of the present claims or presentation of new claims in this or a related application. Such amended or new claims, whether they are directed to a different invention or directed to the same invention, whether different, broader, narrower or equal in scope to the original claims, are also regarded as included within the subject matter of the inventions of the present disclosure.

## Claims

1. A method for providing a personalized catalog (46) to customers (12) comprising: providing (52) a computer system (50) that has browsable items available for purchase; identifying (54) items browsed by a customer (12); generating (46) a personalized catalog containing items selected based on the items browsed by the customer (12); producing (60) the catalog (46); and providing (64) the catalog (46) to the customer (12).

2. A computer-implemented system (20) for providing personalized advertising to customers (12) comprising: a computer system (20) having a browsable on-line catalog of items available for purchase; a tracking routine (30) adapted to identify the items in the on-line catalog viewed by a customer (12); a catalog formatting system (24) that formats a personalized catalog (46); a printer (44) in communication with the computer system (20) adapted to print the formatted personalized catalog (46); a catalog distribution system (64) adapted to send the catalog (46) to the customer (12) along with a purchased item.

3. An automated catalog printing system (10) comprising a server (20) hosting an on-line store; a tracking routine (30) adapted to track and monitor the items viewed by a customer (12) while visiting the on-line store; a formatting routine (24) adapted to format a personalized catalog (46) containing items selected based on the items browsed by the customer (12); a printer (44) in communication with the server (20), the printer (44) being adapted to receive and print the formatted personalized catalog (46).

4. The method of claim 1 wherein the step of producing (60) the catalog (46) is performed by a printer (44).

5. The method of claim 1, 2, or 3 wherein the catalog (46) contains items browsed but not purchased by the customer (12).

6. The method of claim 1 wherein the computer system (50) includes an Internet connection (18).

7. The method of claim 1, 2, or 3 wherein the catalog (46) is mailed to the customer (12).

8. The method of claim 1 further comprising the steps of: transacting (56) a sale of one or more of the items to the customer (12) through the computer system (50); and sending (64) the catalog (46) to the customer (12) with the purchased item.

9. The automated catalog printing system of claim 3 wherein the formatting routine (24) comprises: a first database (28) correlating the customer's identifying information with the pages viewed by the customer (12); and a second database (22) including descriptions of items available from the on-line store.

10. The automated catalog printing system of claim 3 wherein the formatting routine (24) further comprises rules for determining which items included on the pages browsed by the customer (12) to incorporate in the personalized catalog (46).
